# DEMANDE DE BREVET EUROPEEN

(11) **EP 3 015 315 A1**
(43) Date de publication de la demande: **04.05.2016**
(21) Numéro de dépôt: 15192035.2
(22) Date de dépôt: 29.10.2015
(51) Int. Cl.: B60R 13/08, B29C 45/14

(54) **ELÉMENT DE GARNISSAGE DE VÉHICULE AUTOMOBILE**

(30) Priorité: 29.10.2014 FR 1460397
(71) Demandeur: Cera APS, 51100 Reims (FR)
(72) Inventeur: RIBES, Stéphane, 51140 Romain (FR); CHOQUART, François, 51100 Reims (FR)
(74) Mandataire: Sayettat, Julien Christian

(57) **Abrégé**

L'invention concerne un élément (1) comprenant une première paroi (2) en matériau thermoplastique injecté et une deuxième paroi (3) en matériau d'absorption acoustique poreux conformé à chaud à base de fibres reliées entre elles par un liant, ladite première - respectivement deuxième - paroi comprenant une première (4a) - respectivement deuxième (4b) - face inférieure et une première (5a) - respectivement deuxième (5b) - face supérieure, ladite première paroi étant liée à ladite deuxième paroi par un surmoulage bordure contre bordure dans une zone de liaison (6), ledit matériau thermoplastique imprégnant au moins partiellement ledit matériau poreux dans ladite zone de liaison, ladite deuxième paroi présentant en zone de liaison une surcompression périphérique définissant un renfoncement (7) du côté de ladite deuxième face inférieure, ladite première paroi s'étendant dans ledit renfoncement de sorte que lesdites faces inférieures soient généralement dans le prolongement l'une de l'autre, ladite première face supérieure étant, à proximité de ladite zone de liaison, en retrait ou dans le prolongement de ladite deuxième face supérieure de manière à ne pas générer de surépaisseur.

## Description

L'invention concerne un élément de garnissage de véhicule automobile et un procédé de réalisation d'un tel élément.

Il est connu de réaliser un élément de garnissage de véhicule automobile, notamment un dispositif de collecte et de séparation eau/air, une tablette de recouvrement des bagages ou un déflecteur sous caisse, ledit élément comprenant une première paroi en matériau thermoplastique injecté et une deuxième paroi en matériau d'absorption acoustique poreux conformé à chaud à base de fibres reliées entre elles par un liant conformé à chaud, ladite première - respectivement deuxième - paroi comprenant une première - respectivement deuxième - face inférieure et une première - respectivement deuxième - face supérieure, ladite première paroi étant liée à ladite deuxième paroi par un surmoulage bordure contre bordure dans une zone de liaison, ledit matériau thermoplastique imprégnant au moins partiellement ledit matériau poreux dans ladite zone de liaison.

On connait une réalisation dans laquelle la deuxième paroi est prise, au niveau de la zone de liaison, en sandwich entre deux bandes de matériau thermoplastique issues de la première paroi, lesdites bandes formant un bourrelet, ce qui permet une cohésion efficace entre lesdites parois mais s'avère peu esthétique et peut créer une nuisance en terme d'aérodynamisme.

En outre, une telle réalisation ne permet pas de garantir une répétabilité du positionnement de la deuxième paroi par rapport au bourrelet, ce qui peut conduire à des configurations où la cohésion entre les parois est non satisfaisante.

On connait également une réalisation dans laquelle la première paroi surmoule la deuxième paroi uniquement par la tranche, ce qui permet d'améliorer l'esthétique mais peut s'avérer insuffisant pour assurer une cohésion efficace entre lesdites parois.

L'invention a pour but de pallier ces inconvénients.

A cet effet, et selon un premier aspect, l'invention propose un élément de garnissage de véhicule automobile, notamment un dispositif de collecte et de séparation eau/air, une tablette de recouvrement des bagages ou un déflecteur sous caisse, ledit élément comprenant une première paroi en matériau thermoplastique injecté et une deuxième paroi en matériau d'absorption acoustique poreux conformé à chaud à base de fibres reliées entre elles par un liant, ladite première - respectivement deuxième - paroi comprenant une première - respectivement deuxième - face inférieure et une première - respectivement deuxième - face supérieure, ladite première paroi étant liée à ladite deuxième paroi par un surmoulage bordure contre bordure dans une zone de liaison, ledit matériau thermoplastique imprégnant au moins partiellement ledit matériau poreux dans ladite zone de liaison, ladite deuxième paroi présentant en zone de liaison une surcompression périphérique définissant un renfoncement du côté de ladite deuxième face inférieure, ladite première paroi s'étendant dans ledit renfoncement de sorte que lesdites faces inférieures soient généralement dans le prolongement l'une de l'autre, ladite première face supérieure étant, à proximité de ladite zone de liaison, en retrait ou dans le prolongement de ladite deuxième face supérieure de manière à ne pas générer de surépaisseur.

Le fait que les faces inférieures soient généralement dans le prolongement l'une de l'autre n'exclut pas le fait qu'une mince nervure de renfort issue de la première paroi et saillant de la première face inférieure soit disposée dans ladite zone.

Avec l'agencement proposé, on dispose d'un élément esthétique et ne créant pas, en l'absence de nervure de renfort, de nuisance aérodynamique au niveau de la zone de liaison, ceci de par l'absence de bourrelet, et dans lequel on dispose d'une très bonne cohésion entre les parois, de par le surmoulage effectué au niveau de la zone surcomprimée, la largeur de cette zone pouvant être adaptée à la cohésion recherchée.

En outre, un tel agencement garantit une répétabilité du positionnement de la deuxième paroi par rapport à la première paroi dans la zone de liaison, ce qui permet de disposer d'une cohésion toujours efficace entre les parois.

Selon un deuxième aspect, l'invention propose un procédé de réalisation d'un tel élément.

D'autres particularités et avantages de l'invention apparaîtront dans la description qui suit, faite en référence aux figures jointes, dans lesquelles :

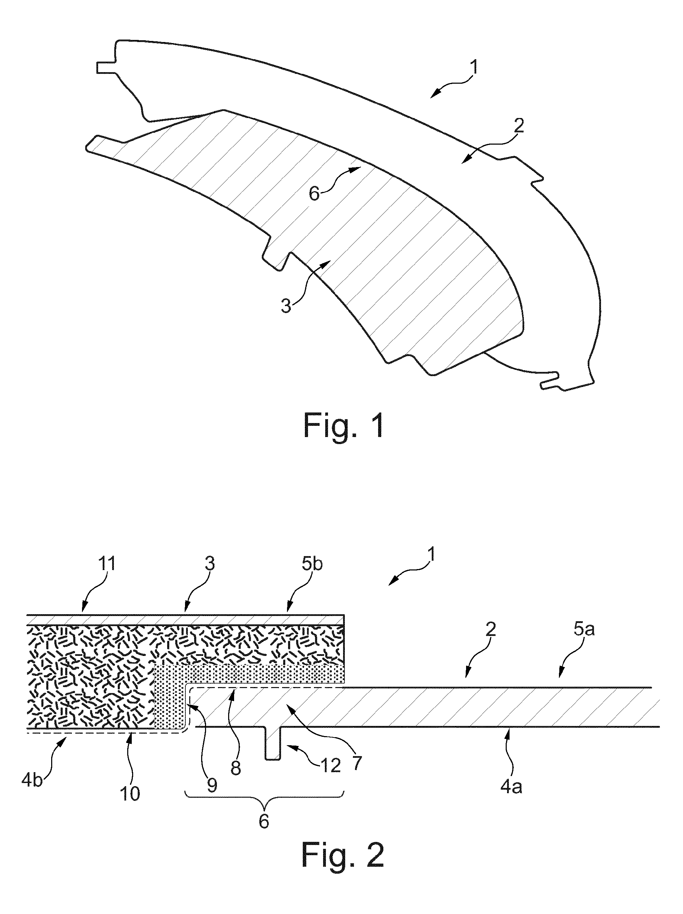

- la figure 1 est une vue schématique en perspective d'un élément selon une réalisation, ledit élément étant un dispositif de collecte et de séparation eau/air,
- la figure 2 est une vue schématique en coupe de détail d'un élément selon un mode de réalisation.

En référence aux figures, on décrit un élément 1 de garnissage de véhicule automobile, notamment un dispositif de collecte et de séparation eau/air, une tablette de recouvrement des bagages ou un déflecteur sous caisse, ledit élément comprenant une première paroi 2 en matériau thermoplastique injecté et une deuxième paroi 3 en matériau d'absorption acoustique poreux conformé à chaud à base de fibres reliées entre elles par un liant, ladite première - respectivement deuxième - paroi comprenant une première 4a - respectivement deuxième 4b -face inférieure et une première 5a - respectivement deuxième 5b -face supérieure, ladite première paroi étant liée à ladite deuxième paroi par un surmoulage bordure contre bordure dans une zone de liaison 6, ledit matériau thermoplastique imprégnant au moins partiellement ledit matériau poreux dans ladite zone de liaison, ladite deuxième paroi présentant en zone de liaison une surcompression périphérique définissant un renfoncement 7 du côté de ladite deuxième face inférieure, ladite première paroi s'étendant dans ledit renfoncement de sorte que lesdites faces inférieures soient généralement dans le prolongement l'une de l'autre, ladite première face supérieure étant, à proximité de ladite zone de liaison, en retrait ou dans le prolongement de ladite deuxième face supérieure de manière à ne pas générer de surépaisseur.

Selon la réalisation représentée, la première paroi 2 comprend une nervure de renfort 12 issue de moulage, saillant de la première face inférieure 4a et étant située en zone de liaison 6.

La nervure peut présenter par exemple une largeur comprise entre 0,5 et 2 mm et une hauteur comprise entre 5 et 20 mm et la zone de liaison une largeur comprise entre 20 et 40 mm.

Selon une réalisation, le matériau poreux comprend entre 40 et 60% en poids de fibres de verre liées entre elles par un liant polypropylène, comme c'est notamment le cas dans un matériau de type Azdel ®.

Selon la réalisation représentée, le renfoncement 7 est conformé en marche, de sorte que le matériau poreux soit imprégné par le matériau thermoplastique selon le plat 8 de ladite marche et selon la contremarche 9 correspondante.

Selon la réalisation représentée, la première face supérieure 5a est, à proximité de la zone de liaison 6, dans le prolongement du plat 8 de la marche.

Selon la réalisation représentée, la deuxième face inférieure 4b est revêtue d'une couche de non-tissé 10 de protection, le matériau thermoplastique traversant ladite couche dans la zone de liaison 6 pour imprégner le matériau poreux.

Selon une réalisation, la profondeur d'imprégnation du matériau poreux par le matériau thermoplastique est inférieure ou égale à 40 mm, et notamment inférieure à 20 mm.

Selon la réalisation représentée, le matériau poreux est recouvert en deuxième face supérieure 5b d'un film d'étanchéité 11, notamment à base de matériau thermoplastique, ceci afin d'empêcher la pénétration de fluide - tel que de l'eau - dans le matériau poreux.

Dans le cas d'un dispositif de collecte et de séparation eau/air, le film 11 est notamment disposé en face supérieure de la boite d'auvent qui est en matériau poreux, ceci afin d'éviter une pénétration de l'eau dans le matériau poreux.

Selon une réalisation non représentée, la deuxième paroi 3 présente un bord découpé en créneaux - par exemple carrés, rectangulaires, en demi-cercles ou en vagues, sachant que le terme « créneaux » doit être pris au sens large - de manière à maximiser l'imprégnation du matériau poreux par le matériau thermoplastique et la robustesse de la liaison entre les parois 2,3.

On décrit à présent un procédé de réalisation d'un élément 1, ledit procédé comprenant les étapes suivantes :
- prévoir une couche de matériau poreux pourvu de fibres et d'un liant activable à chaud,
- réaliser un formage de ladite couche par thermocompression, au moins une partie de la périphérie de ladite couche étant surcomprimée de manière à définir un renfoncement 7,
- effectuer une découpe périphérique de la couche thermo-comprimée de manière à obtenir la deuxième paroi 3,
- disposer ladite deuxième paroi dans un moule d'injection pourvu d'une cavité de moulage à la géométrie de l'élément 1 à obtenir,
- injecter un matériau thermoplastique dans ladite cavité de manière à réaliser la première paroi 2 surmoulant bordure contre bordure ladite deuxième paroi,
- démouler l'élément 1 obtenu.

Selon une réalisation, la masse volumique du matériau poreux avant thermocompression est comprise entre 200 et 300 kg/m³.

## Revendications

1. Élément (1) de garnissage de véhicule automobile, notamment un dispositif de collecte et de séparation eau/air, une tablette de recouvrement des bagages ou un déflecteur sous caisse, ledit élément comprenant une première paroi (2) en matériau thermoplastique injecté et une deuxième paroi (3) en matériau d'absorption acoustique poreux conformé à chaud à base de fibres reliées entre elles par un liant, ladite première - respectivement deuxième - paroi comprenant une première (4a) - respectivement deuxième (4b) - face inférieure et une première (5a) - respectivement deuxième (5b) -face supérieure, ladite première paroi étant liée à ladite deuxième paroi par un surmoulage bordure contre bordure dans une zone de liaison (6), ledit matériau thermoplastique imprégnant au moins partiellement ledit matériau poreux dans ladite zone de liaison, ledit élément étant **caractérisé en ce que** ladite deuxième paroi présente en zone de liaison une surcompression périphérique définissant un renfoncement (7) du côté de ladite deuxième face inférieure, ladite première paroi s'étendant dans ledit renfoncement de sorte que lesdites faces inférieures soient généralement dans le prolongement l'une de l'autre, ladite première face supérieure étant, à proximité de ladite zone de liaison, en retrait ou dans le prolongement de ladite deuxième face supérieure de manière à ne pas générer de surépaisseur.

2. Élément selon la revendication 1, **caractérisé en ce que** la première paroi (2) comprend une nervure de renfort (12) issue de moulage, saillant de la première face inférieure (4a) et étant située en zone de liaison (6).

3. Élément selon l'une des revendications 1 ou 2, **caractérisé en ce que** le matériau poreux comprend entre 40 et 60% en poids de fibres de verre liées entre elles par un liant polypropylène.

4. Élément selon l'une quelconque des revendications 1 à 3, **caractérisé en ce que** le renfoncement (7) est conformé en marche, de sorte que le matériau poreux soit imprégné par le matériau thermoplastique selon le plat (8) de ladite marche et selon la contremarche (9) correspondante.

5. Élément selon la revendication 4, **caractérisé en ce que** la première face supérieure (5a) est, à proximité de la zone de liaison (6), dans le prolongement du plat (8) de la marche.

6. Élément selon l'une quelconque des revendications 1 à 5, **caractérisé en ce que** la deuxième face inférieure (4b) est revêtue d'une couche de non-tissé (10) de protection, le matériau thermoplastique traversant ladite couche dans la zone de liaison (6) pour imprégner le matériau poreux.

7. Élément selon l'une quelconque des revendications 1 à 6, **caractérisé en ce que** la profondeur d'imprégnation du matériau poreux par le matériau thermoplastique est inférieure ou égale à 40 mm, et notamment inférieure à 20 mm.

8. Élément selon l'une quelconque des revendications 1 à 7, **caractérisé en ce que** le matériau poreux est recouvert en deuxième face supérieure (5b) d'un film d'étanchéité (11).

9. Élément selon l'une quelconque des revendications 1 à 8, **caractérisé en ce que** la deuxième paroi (3) présente un bord découpé en créneaux de manière à maximiser l'imprégnation du matériau poreux par le matériau thermoplastique et la robustesse de la liaison entre les parois (2,3).

10. Procédé de réalisation d'un élément (1) selon l'une quelconque des revendications 1 à 9, **caractérisé en ce qu'**il comprend les étapes suivantes :
• prévoir une couche de matériau poreux pourvu de fibres et d'un liant activable à chaud,
• réaliser un formage de ladite couche par thermocompression, au moins une partie de la périphérie de ladite couche étant surcomprimée de manière à définir un renfoncement (7),
• effectuer une découpe périphérique de la couche thermo-comprimée de manière à obtenir la deuxième paroi (3),
• disposer ladite deuxième paroi dans un moule d'injection pourvu d'une cavité de moulage à la géométrie de l'élément (1) à obtenir,
• injecter un matériau thermoplastique dans ladite cavité de manière à réaliser la première paroi (2) surmoulant bordure contre bordure ladite deuxième paroi,
• démouler l'élément (1) obtenu.
